# FASCICULE DE BREVET EUROPEEN

(11) **EP 3 030 777 B1**
(45) Date de publication et mention de la délivrance du brevet: **06.09.2017**
(21) Numéro de dépôt: 14755878.7
(22) Date de dépôt: 25.07.2014
(51) Int. Cl.: F02K 9/50, F02K 9/94

(54) **DISPOSITIF DE PRESSURISATION DE RESERVOIRS D'ERGOL D'UN MOTEUR DE FUSEE**
VORRICHTUNG ZUR DRUCKBEAUFSCHLAGUNG VON TREIBMITTELTANKS EINES RAKETENTRIEBWERKS
DEVICE FOR PRESSURIZING PROPELLANT RESERVOIRS OF A ROCKET ENGINE

(30) Priorité: 06.08.2013 FR 1357808
(43) Date de publication de la demande: 15.06.2016
(73) Titulaire: ArianeGroup SAS, 75015 Paris (FR)
(72) Inventeur: ROZ, Gérard, F-27510 Pressagny L'Orgueilleux (FR); NGUYEN DUC, Lauren, F-75008 Paris (FR); DREYER, Stéphanie, F-27200 Vernon (FR); RAVIER, Nicolas, F-27200 Vernon (FR)
(74) Mandataire: Intès, Didier Gérard André
(86) Numéro de dépôt international: PCT/FR2014/051941
(87) Numéro de publication internationale: WO 2015/019000

(56) Documents cités:
- WO-A1-2012/172238
- FR-A1- 2 197 117
- FR-A1- 2 877 403
- US-A- 2 701 441

## Description

La présente invention concerne un dispositif de pressurisation de réservoirs d'ergol d'un moteur de fusée, comprenant un premier échangeur thermique apte à vaporiser un premier ergol provenant d'un premier réservoir avant sa réintroduction dans ce premier réservoir, et un deuxième échangeur thermique apte à vaporiser un deuxième ergol provenant d'un deuxième réservoir avant sa réintroduction dans ce deuxième réservoir.

Le moteur est habituellement un moteur dans lequel les gaz en sortie de la chambre de combustion sont évacués via une tuyère de manière à développer une poussée.

Par exemple, le premier ergol est un carburant, tel que l'hydrogène ou le méthane, tandis que le deuxième ergol est un comburant, tel que de l'oxygène.

Les ergols sont stockés dans les réservoirs à l'état liquide, et ces réservoirs sont maintenus sous pression afin d'assurer que le débit d'ergols dirigé vers le moteur soit régulier. Pour cela, un prélèvement de chaque ergol à partir de son réservoir passe dans un échangeur thermique afin d'y être chauffé et vaporisé, avant d'être réinjecté à l'état gazeux dans son réservoir de manière à former, dans chaque réservoir, un ciel gazeux d'ergol sous pression.

Un tel ensemble propulsif est généralement conçu pour respecter des phases de vol dites 'phases de propulsion', pendant lesquelles le moteur doit développer une poussée apte à diriger la fusée, et des phases dites 'phases balistiques' pendant lesquelles le moteur est éteint, de sorte que la fusée n'est soumise qu'aux lois de la balistique.

La première partie du vol est une phase de propulsion, pendant laquelle une forte poussée est nécessaire, pour mettre la fusée en orbite. Ensuite, pour des manoeuvres orbitales et le retour sur terre, des phases de propulsion alternent avec des phases balistiques, une faible poussée appliquée sur des laps de temps relativement courts, étant suffisante.

Il importe cependant que le moteur puisse redémarrer rapidement et dans de bonnes conditions à l'issue d'une phase balistique. Ceci signifie notamment que, même lors d'une phase balistique, pendant laquelle le moteur n'est pas actif, une pression suffisante doit être assurée dans les réservoirs d'ergols liquides pour que le débit nécessaire au redémarrage du moteur puisse être obtenu sans délai. En d'autres termes, il importe de vaporiser des prélèvements des deux ergols et de les ré-injecter dans les réservoirs, même pendant une phase balistique, alors que le moteur est inactif.

Dans le même temps, il est important de faire en sorte que la vaporisation des ergols soit réalisée sans dégrader notablement le rendement du moteur. Un ensemble propulsif selon l'art antérieur est connu du document WO2012/172238. L'invention vise donc à proposer un dispositif apte à assurer la pressurisation des deux réservoirs d'ergols par réinjection, dans ce réservoir, d'ergols vaporisés, tout en préservant le rendement énergétique du moteur.

Ce but est atteint grâce au fait que les premier et deuxième échangeurs coopèrent respectivement avec un premier et avec un deuxième générateur de gaz aptes à être alimentés en mélange d'ergols pour provoquer une combustion et au fait que le deuxième générateur de gaz est apte à être au moins partiellement alimenté par l'échappement du premier générateur de gaz.

Ainsi, le premier générateur de gaz peut être alimenté en mélange d'ergols pour réchauffer et vaporiser le premier ergol, et le deuxième générateur de gaz peut être alimenté au mélange d'ergols pour réchauffer et vaporiser le deuxième ergol. On comprend que le fonctionnement de ces générateurs de gaz est indépendant de celui du moteur de fusée. En conséquence, les deux ergols peuvent être réchauffés et vaporisés même en phase balistique, alors que le moteur de fusée est inactif.

Par ailleurs, dans la mesure où le deuxième générateur de gaz est au moins partiellement alimenté par l'échappement du premier générateur de gaz, on fait en sorte que les ergols qui, dans le premier générateur de gaz, ne participent à la combustion, soient utilisés dans le deuxième générateur de gaz pour sa propre combustion, ce qui maximise le rendement de l'échange de chaleur.

Selon un mode de réalisation, le dispositif comprend des moyens de mise en pression des ergols alimentant les générateurs de gaz. Il s'agit en particulier d'une première et d'une deuxième motopompe, respectivement situées en sortie du premier et du deuxième réservoir.

Selon un mode de réalisation, le dispositif comprend, en outre, un circuit régénératif d'échange de chaleur apte à utiliser la chaleur de combustion du moteur pour vaporiser l'un des ergols, dit 'ergol régénéré', et comprend des moyens pour commander une première situation dans laquelle le premier générateur de gaz est alimenté par les premier et deuxième réservoirs, alors que l'alimentation de l'échangeur thermique apte à vaporiser l'ergol régénéré est désactivée et que l'alimentation de l'échangeur thermique apte à vaporiser l'autre ergol que l'ergol régénéré est activée.

Dans ce cas, on peut prévoir que, dans la première situation, le deuxième générateur de gaz soit uniquement alimenté par l'échappement du premier générateur de gaz.

Par exemple, l'ergol régénéré est le premier ergol.

Le circuit régénératif d'échange de chaleur peut être utilisé pour chauffer et vaporiser l'ergol régénéré pendant les phases de propulsion, alors que le moteur de fusée est actif. Dans ce cas, pendant les phases de propulsion, seul l'autre ergol est chauffé et vaporisé à l'aide de l'échangeur thermique qui lui est dédié.

Dans la première situation, seul le premier générateur de gaz produit de la chaleur. Si l'ergol régénéré est le deuxième ergol, pendant les phases de propulsion, c'est le premier échangeur thermique qui est alimenté par le premier ergol, lequel est directement chauffé par le premier générateur de gaz. Cependant, lorsque l'ergol régénéré est le premier ergol, seul le deuxième échange thermique qui est alimenté en ergol, et le deuxième ergol y est chauffé et vaporisé grâce à la chaleur dégagée par le premier générateur de gaz, qui chauffe l'échappement de ce premier générateur de gaz avec lequel coopère le deuxième échangeur thermique, via le deuxième échangeur de gaz qui est alimenté par cet échappement.

On peut choisir que le dispositif comprenne des moyens pour commander une deuxième situation dans laquelle le premier générateur de gaz est alimenté par les premier et deuxième réservoirs, le deuxième générateur de gaz est alimenté par l'échappement du premier générateur de gaz et par le deuxième réservoir, et les alimentations des premier et deuxième échangeurs thermiques sont activées.

Ainsi, pour faire fonctionner le deuxième générateur de gaz, on se contente d'injecter du deuxième ergol dans le fluide d'échappement du premier générateur de gaz, lequel contient une quantité suffisante de premier ergol pour provoquer une combustion du mélange ainsi obtenu. En effet, le premier générateur de gaz est initialement alimenté avec un mélange d'ergols dans lequel le premier ergol (en particulier l'hydrogène) est en excès par rapport aux proportions stoechiométriques.

On peut choisir que le premier générateur de gaz soit alimenté par une première conduite d'alimentation et par une deuxième conduite d'alimentation respectivement reliées au premier et au deuxième réservoir, tandis que le deuxième générateur de gaz est alimenté, d'une part, par une conduite d'échappement du premier générateur de gaz et, d'autre part, par une troisième conduite d'alimentation reliée au deuxième réservoir.

Dans ce cas, on peut prévoir que la troisième conduite d'alimentation soit en dérivation sur la deuxième conduite d'alimentation.

On peut alors prévoir que la troisième conduite d'alimentation soit reliée à la deuxième conduite d'alimentation par une vanne de dérivation.

L'invention sera bien comprise et ses avantages apparaitront mieux à la lecture de la description détaillée qui suit, d'un mode de réalisation représenté à titre d'exemple non limitatif. La description se réfère aux dessins annexés sur lesquels :
- la figure 1 est une vue schématique d'un ensemble propulsif comprenant un moteur de fusée et un dispositif de pressurisation selon l'invention, le moteur étant en phase de propulsion ; et
- la figure 2 montre l'ensemble propulsif de la figure 1, alors que le moteur est en phase balistique.

L'ensemble propulsif représenté sur les figures comprend un moteur de fusée 10 ayant une chambre de combustion 12 et une tuyère 14 présentant un divergent. La chambre de combustion est alimentée en ergols à partir d'un premier réservoir 16 contenant un premier ergol, en premier un ergol réducteur tel que de l'hydrogène ou du méthane, et est également alimenté en deuxième ergol à partir d'un deuxième réservoir 18 contenant un ergol oxydant, en particulier de l'oxygène. L'ergol réducteur sert de carburant, tandis que l'ergol oxydant sert de comburant pour la combustion.

L'alimentation en premier ergol à partir du premier réservoir comprend une première conduite principale d'alimentation 22 débitant dans une première turbopompe 24 et une première conduite d'injection 26 reliée à la sortie de la première turbopompe 24. L'alimentation en deuxième ergol comprend une deuxième conduite principale 30 débitant dans une deuxième turbopompe 32 et une deuxième conduite d'injection 34 reliant la sortie de la deuxième turbopompe 32 à la chambre de combustion. En l'espèce, la première turbopompe 24 est à deux étages, tandis que la deuxième turbopompe 32 est mono-étage.

Des vannes d'autorisation 22A et 30A sont disposées sur les conduites principales d'alimentation 22 et 30.

En l'espèce, le moteur 10 de type "expander", c'est-à-dire un moteur dans lequel un premier ergol est prélevé et vaporisé afin de fournir de l'énergie à certaines parties de l'ensemble propulsif. Plus précisément, la conduite d'injection 26 débite dans un réchauffeur 36 qui coopère avec la paroi de la chambre de combustion 12 pour, en phase de propulsion, chauffer le premier ergol circulant dans ce réchauffeur de manière à le vaporiser. En sortie du réchauffeur 36, le premier ergol est amené par une conduite d'alimentation 38 dans la partie turbine 24A de la première turbopompe 24 pour entraîner sa turbine de manière à actionner sa partie pompe 24B. En sortie de la partie turbine 24A, le premier ergol est amené par une conduite d'amenée 40 à l'entrée de la partie turbine 32A de la deuxième turbopompe 32 pour entraîner sa turbine de manière à actionner sa partie pompe 32B. En sortie de la partie turbine 32A, le premier ergol est amené à l'entrée de la chambre de combustion 12 par une conduite d'injection 42. Une vanne d'isolement 44 est disposée dans cette conduite d'injection 42 qui est reliée au premier réservoir 16 par l'intermédiaire d'un système de vanne de pressurisation et de détente 47. Ainsi, le premier ergol vaporisé retourne au réservoir 16 pour y former un ciel gazeux dont la pression peut être réglée par le système 47.

Ainsi, l'ensemble propulsif comprend un circuit régénératif d'échange de chaleur qui utilise la chaleur de combustion du moteur 10 pour vaporiser le premier ergol. Ce circuit régénératif d'échange de chaleur comprend le réchauffeur 36 et les conduites 38, 40, 42 et 46. Une conduite de bipasse 48 avec une vanne d'arrêt 48A est disposée entre les conduites 38 et 42 pour bipasser les entrées des turbines. Une autre conduite de bipasse 50 avec une vanne d'arrêt 50A est disposée en sortie de la partie turbine de la première turbopompe 24 et la conduite d'injection 42 pour bipasser la partie turbine 32A de la deuxième turbopompe 32.

L'injection en deuxième ergol s'opère directement par la conduite d'injection 34 qui s'étend entre la sortie de la deuxième turbopompe 32 et l'entrée de la chambre de combustion 12. Une vanne d'isolement 52 est disposée sur la conduite 34 pour autoriser ou stopper le débit d'injection.

On a représenté sur les figures un tronçon de conduite 54 équipé d'un clapet anti-retour 56. Ce tronçon de conduite 54 peut être raccordé à une alimentation en fluide neutre, par exemple l'hélium, pour éviter les remontées de premier ergol dans la cavité d'injection de deuxième ergol lors du démarrage du moteur 10. Le clapet anti-retour 56 permet seulement la circulation du fluide neutre dans le sens allant vers la chambre de combustion 12.

L'ensemble propulsif comprend un premier générateur de gaz 60 qui est alimenté en premier ergol par une première conduite d'alimentation 62 raccordée au premier réservoir 16 par une première motopompe ou analogue 64. Une vanne d'alimentation 66 est disposée sur la première conduite d'alimentation 62. Le premier générateur de gaz 60 est alimenté en deuxième ergol par une deuxième conduite d'alimentation 68 reliée au deuxième réservoir 18 par une deuxième motopompe 70 ou analogue. Une deuxième vanne d'alimentation 72 est disposée sur la deuxième conduite d'alimentation. Un premier échangeur thermique 74 coopère avec le premier régénérateur de gaz. Par exemple, ce premier échangeur thermique peut comprendre un tube à double paroi disposé autour de l'échappement 76 du premier générateur de gaz. Ce premier échangeur thermique peut être alimenté en premier ergol par une première conduite d'échange 78 reliée au réservoir 16. En l'espèce, cette première conduite d'échange 78 est une première conduite de piquage qui est reliée à la première conduite d'alimentation 62. En l'espèce, la première conduite de piquage 78 est reliée à la première conduite d'alimentation 62 par une vanne de piquage 80 qui peut être ouverte ou fermée pour autoriser ou non l'alimentation du premier échangeur thermique en premier ergol. La sortie du premier échangeur thermique 74 est reliée au premier réservoir 16 par une conduite de retour 82 de sorte que le premier ergol vaporisé dans le premier échangeur 74 thermique est ré-injecté dans le ciel gazeux du premier réservoir 16. En l'espèce, la conduite de retour 82 est reliée à la conduite 46 en aval du système de valve 47.

L'ensemble propulsif comprend également un deuxième générateur de gaz 84 qui est alimenté, d'une part, par l'échappement 76 du premier générateur de gaz et, d'autre part, par une troisième conduite d'alimentation 86 qui est reliée au deuxième réservoir 18. En l'espèce, la troisième conduite d'alimentation est reliée à la deuxième conduite d'alimentation 68 par une vanne de dérivation 88.

Un deuxième échangeur thermique 90 coopère avec le deuxième générateur de gaz 84 pour vaporiser le deuxième ergol. Ce deuxième échangeur thermique peut par exemple être formé par un tube à double parois, qui coopère avec l'échappement 92 du deuxième échangeur thermique, et dans lequel le deuxième ergol peut circuler. A cet effet, le deuxième échangeur thermique 90 peut être alimenté par une deuxième conduite de piquage 94 reliée à la deuxième conduite d'alimentation 68. En l'espèce, cette liaison est réalisée en aval de la vanne d'alimentation 72 et la troisième conduite d'alimentation 86 est elle-même réalisée sous la forme d'un piquage prenant sur la conduite 94 via la vanne de dérivation 88.

La sortie du deuxième échangeur thermique 90 est reliée au deuxième réservoir 18 par une deuxième conduite de retour 100 de sorte que le deuxième ergol vaporisé dans le deuxième échangeur thermique vient alimenter le ciel gazeux du deuxième réservoir 18.

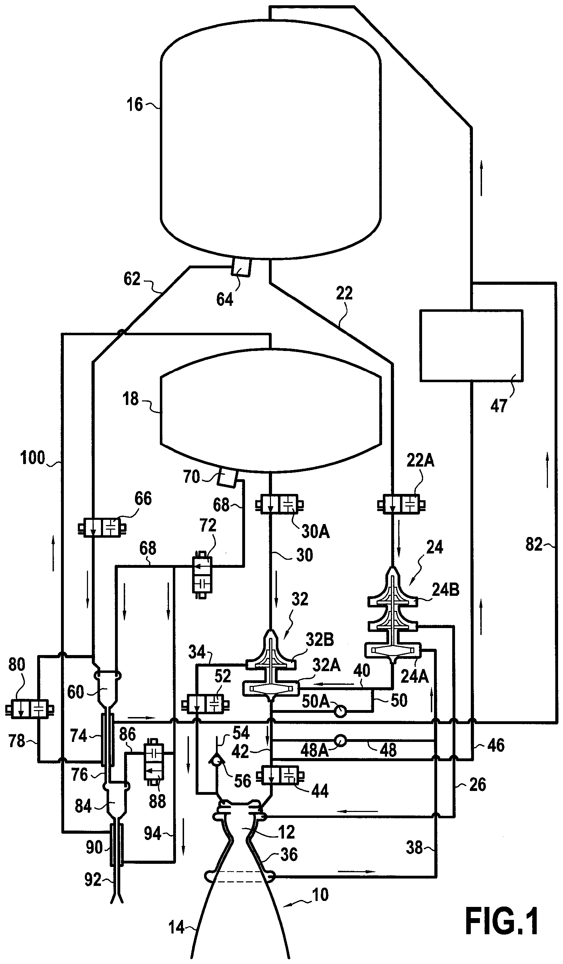

Dans la situation représentée sur la figure 1, le moteur 10 est en phase de propulsion. Dans cette situation, les vannes d'alimentation 66 et 72 sont ouvertes, tandis que la vanne de piquage 80 et la vanne de dérivation 88 sont fermées. Ainsi, le premier générateur de gaz 60 est alimenté en premier et en deuxième ergol, et est donc mis en fonctionnement. Cependant, le premier échangeur thermique 74 n'est pas alimenté en premier ergol. Ainsi qu'on l'a indiqué, la vaporisation du premier ergol s'effectue par le circuit régénératif. Dans le même temps, le deuxième échangeur thermique 90 est alimenté en deuxième ergol par la conduite de piquage 94. Le deuxième générateur de gaz 84 est disposé en série avec le premier générateur de gaz 60, c'est-à-dire que l'échappement du premier générateur de gaz débite à l'entrée du deuxième générateur de gaz. Dans la mesure où le premier échangeur thermique 74 n'est pas alimenté en ergol, le fluide d'échappement du premier générateur de gaz parvient à l'état chaud dans le deuxième générateur de gaz. Cependant, le deuxième générateur de gaz n'est pas alimenté en deuxième ergol, la vanne 88 étant fermée. Ainsi, il ne se produit pas de nouvelle combustion dans le deuxième générateur de gaz, mais l'échappement du premier générateur de gaz débite directement vers l'échappement 92 du deuxième générateur de gaz. Dans la mesure où le deuxième échangeur thermique 90 est alimenté en deuxième ergol, ce dernier est ainsi vaporisé malgré l'absence de combustion dans ce deuxième générateur de gaz, mais grâce à la combustion opérée dans le premier régénérateur de gaz. On se trouve alors dans une première situation, dans laquelle la vaporisation du premier ergol est réalisée par le circuit régénératif, ce premier ergol étant alors dénommé 'ergol régénéré', tandis que celle du deuxième ergol est réalisée par le deuxième échangeur thermique, du fait de la chaleur provenant du premier générateur de gaz. Les moyens pour commander cette première situation comprennent donc les vannes 66 et 72 qui sont ouvertes, et les vannes 80 et 88 qui sont fermées. Ces vannes sont commandées par tout moyen approprié, en particulier une unité électronique de commande.

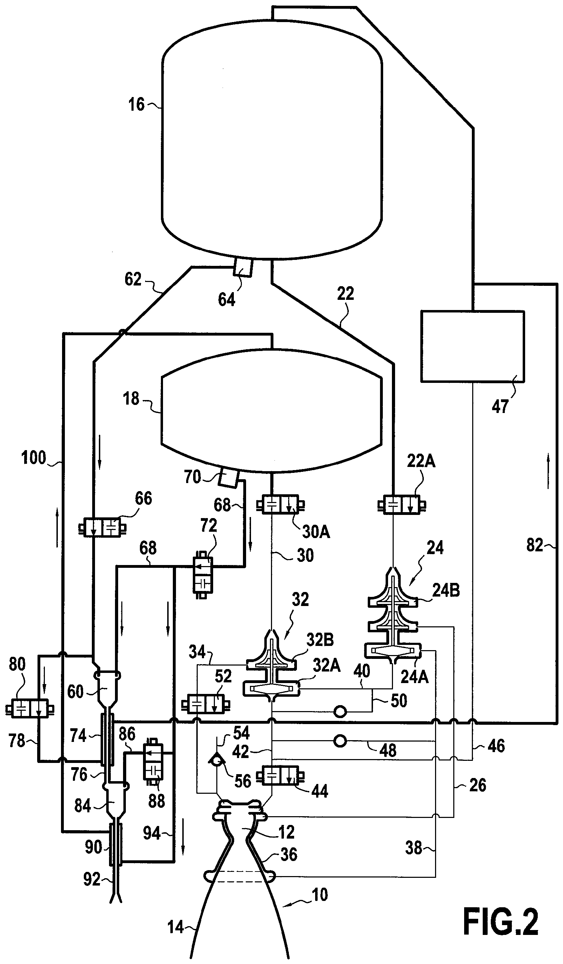

Sur la figure 2, le moteur 10 est inactif. On voit en effet que les vannes 22A et 30A sont fermées, de sorte que les réservoirs ne débitent pas dans les turbopompes 24 et 32. Cependant, les vannes d'alimentation 66 et 72 sont ouvertes, de sorte que le premier générateur de gaz 60 est alimenté avec les deux ergols. La vanne de piquage 80 est également ouverte, de sorte que le premier échangeur thermique 74 est alimenté en premier ergol. De même, la vanne de dérivation 88 est ouverte, de sorte que le deuxième ergol est injecté dans le deuxième générateur de gaz 84. Ainsi, une combustion se produit non seulement dans le premier générateur de gaz, mais également dans le deuxième générateur de gaz, par le mélange du deuxième ergol avec l'échappement 76 provenant du premier générateur de gaz. Le deuxième échangeur thermique 90 est alimenté en deuxième ergol par la conduite de piquage 94.

Ainsi, le premier ergol est chauffé et vaporisé dans le premier échangeur thermique 74 du fait de la combustion opérée dans le premier générateur de gaz. Le premier ergol vaporisé retourne au ciel gazeux du premier réservoir par la conduite de retour 82. Le deuxième ergol est quant à lui chauffé et vaporisé dans le deuxième échangeur thermique 90 du fait de la combustion opérée dans le deuxième générateur de gaz 84. Le deuxième ergol vaporisé retourne au deuxième réservoir 18 par la conduite de retour 100.

Dans ces conditions, bien que le moteur 10 ne fonctionne pas, la mise en pression du premier réservoir reste assurée par la vaporisation du premier ergol dans le premier échangeur thermique coopérant avec le générateur de gaz. Au lieu d'être recraché à l'atmosphère, le fluide d'échappement provenant du premier générateur de gaz sert à l'alimentation du deuxième générateur de gaz, augmentant ainsi le rendement global de l'ensemble propulsif. Grâce à cela, la pression souhaitée reste assurée dans les deux réservoirs, pour chacun des deux ergols.

On règle en effet le débit d'alimentation du premier générateur de gaz 60, d'une part pour que son échappement contienne une quantité de premier ergol suffisante à la production de chaleur nécessaire au fonctionnement du deuxième générateur de gaz par mélange avec le deuxième ergol injecté dans ce deuxième générateur, et d'autre part pour que la température des gaz en sortie du premier générateur de gaz reste supérieure au point de rosée (absence de condensation) lorsque le premier échangeur thermique 74 est actif.

Dans l'exemple qui vient d'être décrit, le deuxième générateur de gaz est seulement alimenté en premier ergol par le fluide d'échappement du premier générateur de gaz. On pourrait toutefois prévoir une conduite d'alimentation auxiliaire en premier ergol, débouchant dans le deuxième générateur de gaz. Cette conduite serait équipée d'une vanne d'autorisation et servirait uniquement en cas de nécessité.

## Revendications

1. Dispositif de pressurisation de réservoirs d'ergol d'un moteur de fusée (10), comprenant un premier échangeur thermique (74, 90) apte à vaporiser un premier ergol provenant d'un premier réservoir (16) avant sa réintroduction dans ce premier réservoir, et un deuxième échangeur thermique (90) apte à vaporiser un deuxième ergol provenant d'un deuxième réservoir (18) avant sa réintroduction dans ce deuxième réservoir,
**caractérisé en ce que** les premier et deuxième échangeurs (74, 90) coopèrent respectivement avec un premier et avec un deuxième générateur de gaz (60, 84) aptes à être alimentés en mélange d'ergols pour provoquer une combustion et **en ce que** le deuxième générateur de gaz (84) est apte à être au moins partiellement alimenté par l'échappement du premier générateur de gaz (60).

2. Dispositif selon la revendication 1, **caractérisé en ce qu'**il comprend des moyens de mise en pression des ergols alimentant les générateurs de gaz.

3. Dispositif selon la revendication 2, **caractérisé en ce qu'**il comprend une première et une deuxième motopompe (64, 70) respectivement situées en sortie du premier et du deuxième réservoir (16, 18).

4. Dispositif selon l'une quelconque des revendications 1 à 3, **caractérisé en ce qu'**il comprend, en outre, un circuit régénératif d'échange de chaleur (36, 38, 40, 42, 46, 47) utilisant la chaleur de combustion du moteur (10) pour vaporiser l'un des ergols, dit 'ergol régénéré', et **en ce qu'**il comprend des moyens (66, 72, 80, 88) pour commander une première situation dans laquelle le premier générateur de gaz (60) est alimenté par les premier et deuxième réservoirs (16, 18), alors que l'alimentation de l'échangeur thermique (74) apte à vaporiser l'ergol régénéré est désactivée et que l'alimentation de l'échangeur thermique (90) apte à vaporiser l'autre ergol est activée.

5. Dispositif selon la revendication 4, **caractérisé en ce que**, dans la première situation, le deuxième générateur de gaz (84) est uniquement alimenté par l'échappement (76) du premier générateur de gaz (60).

6. Dispositif selon la revendication 4 ou 5, **caractérisé en ce que** l'ergol régénéré est le premier ergol.

7. Dispositif selon l'une quelconque des revendications 1 à 6, **caractérisé en ce qu'**il comprend des moyens (66, 72, 80, 88) pour commander une deuxième situation dans laquelle le premier générateur de gaz (60) est alimenté par les premier et deuxième réservoirs (16, 18), le deuxième générateur de gaz (84) est alimenté par l'échappement (76) du premier générateur de gaz (60) et par le deuxième réservoir (18), et les alimentations des premier et deuxième échangeurs thermiques (74, 90) sont activées.

8. Dispositif selon l'une quelconque des revendications 1 à 7, **caractérisé en ce que** le premier générateur de gaz (60) est alimenté par une première conduite d'alimentation (62) et par une deuxième conduite d'alimentation (68) respectivement reliées au premier et au deuxième réservoir (16, 18), tandis que le deuxième générateur de gaz (84) est alimenté, d'une part, par une conduite d'échappement (76) du premier générateur de gaz (60) et, d'autre part, par une troisième conduite d'alimentation (86) reliée au deuxième réservoir (18).

9. Dispositif selon la revendication 8, **caractérisé en ce que** la troisième conduite d'alimentation (86) est en dérivation sur la deuxième conduite d'alimentation (68).

10. Dispositif selon la revendication 9, **caractérisé en ce que** la troisième conduite d'alimentation (86) est reliée à la deuxième conduite d'alimentation (68) par une vanne de dérivation (88).

11. Dispositif selon l'une quelconque des revendications 8 à 10, **caractérisé en ce que** le premier échangeur thermique (74) est apte à être alimenté par une première conduite de piquage (78) reliée à la première conduite d'alimentation (62) et le deuxième échangeur thermique (90) est apte à être alimenté par une deuxième conduite de piquage (94) reliée à la deuxième conduite d'alimentation (68).

12. Dispositif selon la revendication 11, **caractérisé en ce que** la première conduite de piquage (78) est reliée à la première conduite d'alimentation (62) par une vanne de piquage (80).

13. Dispositif selon l'une quelconque des revendications 8 à 12, **caractérisé en ce que** des vannes d'alimentation (66, 72) sont disposées respectivement sur la première et sur la deuxième conduite d'alimentation (62, 68).

## Patentansprüche

1. Vorrichtung zur Druckbeaufschlagung von Treibmitteltanks eines Raketentriebwerks (10), umfassend einen ersten Wärmetauscher (74, 90), der geeignet ist, ein erstes Treibmittel, das von einem ersten Tank (16) kommt, vor seiner Wiedereinleitung in diesen ersten Tank zu verdampfen, und einen zweiten Wärmetauscher (90), der geeignet ist, ein zweites Treibmittel, das von einem zweiten Tank (18) kommt, vor seiner Wiedereinleitung in diesen zweiten Tank zu verdampfen,
**dadurch gekennzeichnet, dass** die ersten und zweiten Wärmetauscher (74, 90) mit einem ersten bzw. zweiten Gasgenerator (60, 84) zusammenwirken, und geeignet sind, mit einem Treibmittelgemisch gespeist zu werden, um eine Verbrennung hervorzurufen, und dass der zweite Gasgenerator (84) geeignet ist, zumindest teilweise mit den Abgasen des ersten Gasgenerators (60) gespeist zu werden.

2. Vorrichtung gemäß Anspruch 1, **dadurch gekennzeichnet, dass** sie Mittel zur Druckbeaufschlagung der Treibmittel, mit denen die Gasgeneratoren gespeist werden, umfasst.

3. Vorrichtung gemäß Anspruch 2, **dadurch gekennzeichnet, dass** sie eine erste und eine zweite Motorpumpe (64, 70) umfasst, die am Ausgang des ersten bzw. des zweiten Tanks (16, 18) angeordnet sind.

4. Vorrichtung gemäß einem der Ansprüche 1 bis 3, **dadurch gekennzeichnet, dass** sie ferner eine Regenerationswärmetauschschaltung (36, 38, 40, 42, 46, 47) umfasst, die die Verbrennungswärme des Motors (10) verwendet, um einen der Treibstoffe, "regenerierter Treibstoff' genannt, zu verdampfen, und dass sie Mittel (66, 72, 80, 88) umfasst, um eine erste Situation zu steuern, in der der erste Gasgenerator (60) von den ersten und zweiten Tanks (16, 18) gespeist wird, während die Speisung des Wärmetauschers (74), der geeignet ist, den regenerierten Treibstoff zu verdampfen, deaktiviert ist, und die Speisung des Wärmetauschers (90), der geeignet ist, den anderen Treibstoff zu verdampfen, aktiviert ist.

5. Vorrichtung gemäß Anspruch 4, **dadurch gekennzeichnet, dass** in der ersten Situation der zweite Gasgenerator (84) nur durch die Abgase (76) des ersten Gasgenerators (60) gespeist wird.

6. Vorrichtung gemäß Anspruch 4 oder 5, **dadurch gekennzeichnet, dass** der regenerierte Treibstoff der erste Treibstoff ist.

7. Vorrichtung gemäß einem der Ansprüche 1 bis 6, **dadurch gekennzeichnet, dass** sie Mittel (66, 72, 80, 88) umfasst, um eine zweite Situation zu steuern, in der der erste Gasgenerator (60) von den ersten und zweiten Tanks (16, 18) gespeist wird, der zweite Gasgenerator (84) von den Abgasen (76) des ersten Gasgenerators (60) und von dem zweiten Tank (18) gespeist wird, und die Speisungen der ersten und zweiten Wärmetauscher (74, 90) aktiviert sind.

8. Vorrichtung gemäß einem der Ansprüche 1 bis 7, **dadurch gekennzeichnet, dass** der erste Gasgenerator (60) von einer ersten Speiseleitung (62) und von einer zweiten Speiseleitung (68) gespeist wird, die mit dem ersten bzw. dem zweiten Tank (16, 18) verbunden sind, während der zweite Gasgenerator (84) einerseits von einer Abgasleitung (76) des ersten Gasgenerators (60) und andererseits von einer dritten Speiseleitung (86), die mit dem zweiten Tank (18) verbunden ist, gespeist wird.

9. Vorrichtung gemäß Anspruch 8, **dadurch gekennzeichnet, dass** die dritte Speiseleitung (86) auf der zweiten Speiseleitung (68) in Abzweigung geführt ist.

10. Vorrichtung gemäß Anspruch 9, **dadurch gekennzeichnet, dass** die dritte Speiseleitung (86) mit der zweiten Speiseleitung (68) durch ein Abzweigungsventil (88) verbunden ist.

11. Vorrichtung gemäß einem der Ansprüche 8 bis 10, **dadurch gekennzeichnet, dass** der erste Wärmetauscher (74) geeignet ist, von einer ersten Anschlussleitung (78) gespeist zu werden, die mit der ersten Speiseleitung (62) verbunden ist, und der zweite Wärmetauscher (90) geeignet ist, von einer zweiten Anschlussleitung (94) gespeist zu werden, die mit der zweiten Speiseleitung (68) verbunden ist.

12. Vorrichtung gemäß Anspruch 11, **dadurch gekennzeichnet, dass** die erste Anschlussleitung (78) mit der ersten Speiseleitung (62) durch ein Anschlussventil (80) verbunden ist.

13. Vorrichtung gemäß einem der Ansprüche 8 bis 12, **dadurch gekennzeichnet, dass** die Speiseventile (66, 72) auf der ersten bzw. auf der zweiten Speiseleitung (62, 68) angeordnet sind.

## Claims

1. A device for pressurizing fuel tanks of a rocket engine (10), the device comprising a first heat exchanger (74, 90) suitable for vaporizing a first propellant coming from a first tank (16) prior to being reintroduced into the first tank, and a second heat exchanger (90) suitable for vaporizing a second propellant coming from a second tank (18) prior to being reintroduced into the second tank, the device being **characterized in that** the first and second heat exchangers (74, 90) co-operate respectively with first and second gas generators (60, 84) suitable for being fed with a mixture of propellants in order to produce combustion, and **in that** the second gas generator (84) is suitable for being fed at least in part by the exhaust from the first gas generator (60).

2. A device according to claim 1, **characterized in that** it includes means for pressurizing the propellants feeding the gas generators.

3. A device according to claim 2, **characterized in that** it includes first and second motor-driven pumps (64, 70) respectively situated at the outlets from the first and second tanks (16, 18).

4. A device according to any one of claims 1 to 3, **characterized in that** it further comprises a regenerative heat exchange circuit (36, 38, 40, 42, 46, 47) using the combustion heat from the engine (10) to vaporize one of the propellants, referred to as the "regenerated" propellant, and **in that** it includes means (66, 72, 80, 88) for setting up a first situation in which the first gas generator (60) is fed by the first and second tanks (16, 18), while the feed to the heat exchanger (74) for vaporizing the regenerated propellant is deactivated and the feed of the heat exchanger (90) for vaporizing the other propellant is activated.

5. A device according to claim 4, **characterized in that**, in the first situation, the second gas generator (84) is fed solely by the exhaust (76) of the first gas generator (60).

6. A device according to claim 4 or claim 5, **characterized in that** the regenerated propellant is the first propellant.

7. A device according to any one of claims 1 to 6, **characterized in that** it includes means (66, 72, 80, 88) for setting up a second situation in which the first gas generator (60) is fed by the first and second tanks (16, 18), the second gas generator (84) is fed by the exhaust (76) of the first gas generator (60) and by the second tank (18), and the feeds of the first and second heat exchangers (74, 90) are activated.

8. A device according to any one of claims 1 to 7, **characterized in that** the first gas generator (60) is fed by a first feed pipe (62) and by a second feed pipe (68) respectively connected to the first and second tanks (16, 18), while the second gas generator (84) is fed firstly by an exhaust pipe (76) of the first gas generator (60) and secondly by a third feed pipe (86) connected to the second tank (18).

9. A device according to claim 8, **characterized in that** the third feed pipe (86) is a branch connection on the second feed pipe (68).

10. A device according to claim 9, **characterized in that** the third feed pipe (86) is connected to the second feed pipe (68) via a branch valve (88).

11. A device according to any one of claims 8 to 10, **characterized in that** the first heat exchanger (74) is suitable for being fed by a first tapping pipe (78) connected to the first feed pipe (62), and the second heat exchanger (90) is suitable for being fed by a second tapping pipe (94) connected to the second feed pipe (68).

12. A device according to claim 11, **characterized in that** the first tapping pipe (78) is connected to the first feed pipe (62) via a tapping valve (80).

13. A device according to any one of claims 8 to 12, **characterized in that** the feed valves (66, 72) are arranged respectively in the first and second feed pipes (62, 68).
